# EUROPEAN PATENT SPECIFICATION

(11) **EP 3 592 114 B1**
(45) Date of publication and mention of the grant of the patent: **07.04.2021**
(21) Application number: 19183126.2
(22) Date of filing: 28.06.2019
(51) Int. Cl.: H05B 45/3575, H05B 45/10, H05B 45/37

(54) **RESET CURRENT CONTROL CIRCUIT, RESET CURRENT CONTROL METHOD AND LIGHT EMITTING DIODE DRIVING CIRCUIT**
RÜCKSETZSTROMSTEUERUNGSSCHALTUNG, RÜCKSETZSTROMSTEUERUNGSVERFAHREN UND LEUCHTDIODENANSTEUERUNGSSCHALTUNG
CIRCUIT DE COMMANDE DE COURANT DE RÉINITIALISATION, PROCÉDÉ DE COMMANDE DE COURANT DE RÉINITIALISATION ET CIRCUIT DE COMMANDE DE DIODE ÉLECTROLUMINESCENTE

(30) Priority: 06.07.2018 CN 201810739361
(43) Date of publication of application: 08.01.2020
(73) Proprietor: Silergy Semiconductor Technology (Hangzhou) Ltd, Hangzhou, Zhejiang 310012 (CN)
(72) Inventor: WANG, Longqi, Hangzhou, Zhejiang 310012 (CN); WANG, Jianxin, Hangzhou, Zhejiang 310012 (CN)
(74) Representative: Ström & Gulliksson AB

(56) References cited:
- US-A1- 2012 056 553
- US-A1- 2015 002 040

## Description

### FIELD

The present disclosure relates to the field of power electronic technology, and in particular to a reset current control circuit, a reset current control method and a light emitting diode (LED) driving circuit.

### BACKGROUND

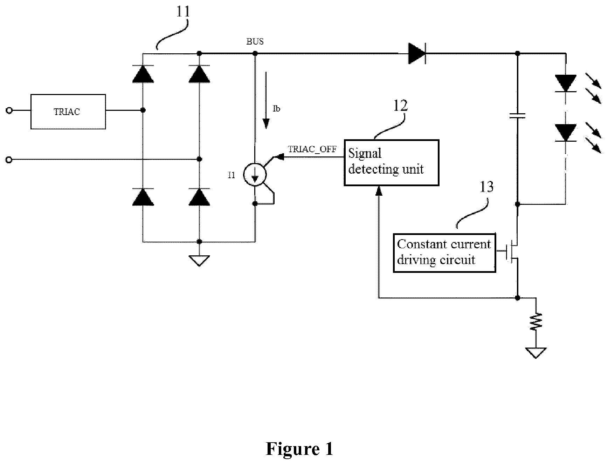

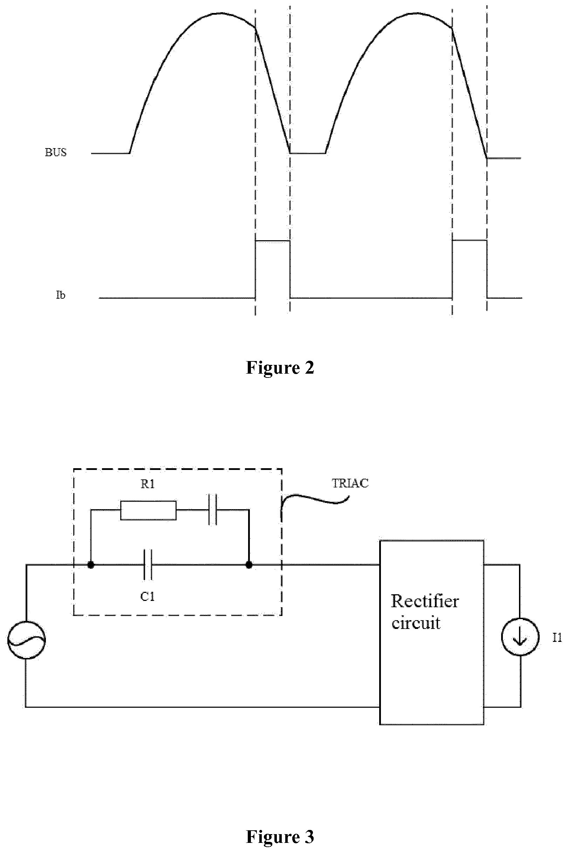

A conventional light emitting diode (LED) driving circuit and a waveform diagram of signals for the same are respectively as shown in Figure 1 and Figure 2. The conventional LED driving circuit includes a dimmer TRIAC, a rectifier circuit 11, a controlled current source I1, a signal detecting unit 12 and a constant current driving circuit 13. The constant current driving circuit 13 is configured to generate an LED driving current to drive an LED load. The signal detecting unit 12 is configured to detect a magnitude of the LED driving current to acquire a state of the dimmer TRIAC, and output a valid control signal TRIAC_OFF in a case that the dimmer TRIAC is in an off state, to control a magnitude of a bleeder current Ib of the controlled current source I1, to reset the dimmer TRIAC. As shown in Figure 2, in a case that the dimmer TRIAC is turned off, the controlled current source I1 continuously draw a large bleeder current Ib under control to pull-down the direct current bus voltage, to reset the dimmer TRIAC reliably. However, this may results in a large circuit loss. As shown in Figure 3, in a case that the dimmer TRIAC is turned off, if a large reset current is supplied for resetting, the direct current bus voltage may drop directly to zero, and the voltage at a terminal of a capacitor C1 in the dimmer TRIAC, which is connected to the rectifier circuit, is zero. In a case that the inputted alternative current voltage varies, the capacitor C1 may be charged and discharged alternately and uninterruptedly, resulting in a loss on the resistor R1 connected in parallel with the capacitor C1. In addition, the controlled current source I1 may also cause a loss.

A patent application No.US2012/056553A1 discloses a circuit for connecting to a dimmer, the circuit is configured to receive an input signal from the dimmer. The circuit comprises a first load and a switch. The switch is operable to automatically engage the first load at a predetermined time from a zero-crossing of the input signal and automatically disengage the first load at other times.

A patent application No.US2015/002040A1 relates to a driver device (60) for driving a load (12), in particular an LED unit comprising one or more LEDs, said driver device comprising input terminals (28, 30) for receiving an input voltage (V12) from an external power supply (16), output terminals for providing an output voltage to the load (12) for driving the load (12), a converter unit (34) for converting the input voltage (VI 2) to a converted voltage (VI 4) and for providing the converted voltage (VI 4) to internal connection elements (63, 64) of the driver device (60), a signal control device (62) for applying an electrical signal (I) to at least one of the connection elements (63, 64), and a detection circuit for detecting a phase angle of the input voltage (VI 2) by measuring a voltage drop of the converted voltage (VI 4) caused by the electrical signal (I).

### SUMMARY

The invention provides a reset current control method according to claim 1, a reset current control circuit according to claim 3 and an LED driving circuit according to claim 7. Preferred embodiments are defined by the dependent claims.

In view of this, a reset current control circuit, a reset current control method and a light emitting diode (LED) driving circuit are provided according to the present disclosure, to reduce circuit loss of the dimmer during a reset process, and to improve efficiency of the circuit.

In a first aspect, a reset current control method is provided, which includes: generating a reset current in a case that it is detected that a dimmer is in an off state, to reset the dimmer, where the reset current is variable and the reset current is controlled to be increased in a step mode after the dimmer is turned off.

Further, the reset current is maintained at a first current during a first time period after the dimmer is turned off, and is maintained at a second current during a second time period. The first current is less than the second current.

Further, the dimmer is a trailing edge dimmer.

Further, the reset current is maintained at the first current during a time period where a light emitting diode (LED) driving current or a direct current bus current is less than a current threshold, where the current threshold is preset and is used to characterize the LED driving current or the direct current bus current when the dimmer is switched to an off state from an on state.

Further, the reset current is maintained at the second current during a time period where the direct current bus voltage is less than a first voltage threshold, to reset the dimmer.

Further, the reset current is maintained at the first current during a time period from a time when the LED driving current or the direct current bus current drops below the current threshold to a time when the direct current bus voltage drops below the first voltage threshold.

In a second aspect, a reset current control circuit is provided, which is applied in an LED driving circuit provided with a dimmer. The reset current control circuit is configured to generate a reset current in a case that it is detected that the dimmer is in an off state, to reset the dimmer. The reset current is variable and the reset current is controlled to be increased in a step mode after the dimmer is turned off.

Further, the dimmer is a trailing edge dimmer.

Further, the reset current control circuit includes a controlled current source and a controller.

The controlled current source is configured to generate the reset current under control.

The controller is configured to control the controlled current source to maintain the reset current at a first current during a first time period after the dimmer is turned off, and control the controlled current source to maintain the reset current at a second current during a second time period. The first current is less than the second current.

Further, the controller is configured to perform control to maintain the reset current at the first current during a time period where an LED driving current or a direct current bus current is less than a current threshold, where the current threshold is preset and is used to characterize the LED driving current or the direct current bus current when the dimmer is switched to an off state from an on state.

Further, the controller is further configured to perform control to maintain the reset current at the second current during a time period where a direct current bus voltage is less than a first voltage threshold, to reset the dimmer.

Further, the controller is further configured to perform control to maintain the reset current at the first current during a time period from a time when the LED driving current or the direct current bus current drops below the current threshold to a time when the direct current bus voltage drops below the first voltage threshold.

Further, the controller includes a voltage switching circuit, a first voltage detecting circuit, a second voltage detecting circuit, a current detecting circuit and a first logic circuit.

The voltage switching circuit is configured to output an output voltage under control.

The first voltage detecting circuit is configured to control the voltage switching circuit to output a second voltage in a case that it is detected that the direct current bus voltage is less than the first voltage threshold. The second voltage corresponds to the second current.

The second voltage detecting circuit is configured to output a first control signal in a case that it is detected that the direct current bus voltage is less than a second voltage threshold.

The current detecting circuit is configured to output a second control signal in a case that it is detected that the LED driving current or the direct current bus current drops below the current threshold.

The first logic circuit is configured to control, in response to the second control signal, the voltage switching circuit to output the first voltage, and control, in response to the first control signal, the voltage switching circuit to stop outputting the first voltage, wherein the first voltage corresponds to the first current.

Further, the controller includes a third voltage detecting circuit, a second logic circuit, a current detecting circuit and a voltage switching circuit.

The third voltage detecting circuit is configured to output a third control signal in a case that it is detected that the direct current bus voltage is less than the first voltage threshold to control the voltage switching circuit to output a second voltage. The second voltage corresponds to the second current.

The second logic circuit is configured to output a fourth control signal in response to the third control signal.

The current detecting circuit is configured to output a fifth control signal in a case that it is detected that the LED driving current or the direct current bus current is less than the current threshold.

The voltage switching circuit is configured to output the second voltage in response to the third control signal, and to output the first voltage in response to the fourth control signal and the fifth control signal. The second voltage corresponds to the second current, and the first voltage corresponds to the first current.

In a third aspect, an LED driving circuit is provided, which includes a dimmer, a rectifier circuit, a reset current control circuit and a constant current driving circuit.

The rectifier circuit is connected to the dimmer, and an output of the rectifier circuit is connected to the direct current bus.

The reset current control circuit is as described above, and is connected to the direct current bus.

The constant current driving circuit is configured to generate an LED driving current to drive an LED load.

According to the technical solutions according to the embodiments of the present disclosure, a reset current is generated in a case that it is detected that the dimmer is in an off state, to reset the dimmer. The reset current is variable and has a contrary variation trend to a direct current bus voltage of the LED driving circuit, such that a circuit loss of the dimmer during the reset process is reduced, thereby improving the efficiency of the circuit.

### BRIEF DESCRIPTION OF THE DRAWINGS

The above and other objects, features and advantages of the present disclosure become more apparent according to the description of embodiments of the present disclosure made in conjunction with the drawings hereinafter.
Figure 1 is a circuit diagram of an LED driving circuit according to the conventional technology;
Figure 2 is a waveform diagram for the LED driving circuit according to the conventional technology;
Figure 3 is a schematic circuit diagram of the LED driving circuit according to the conventional technology;
Figure 4 is a circuit diagram of an LED driving circuit according to an embodiment of the present disclosure;
Figure 5 is a schematic circuit diagram of an LED driving circuit according to an embodiment of the present disclosure;
Figure 6 is a waveform diagram for the LED driving circuit according to the embodiment of the present disclosure;
Figure 7 is a schematic circuit diagram of an LED driving circuit according to another embodiment of the present disclosure;
Figure 8 is a waveform diagram for the LED driving circuit according to the other embodiment of the present disclosure; and
Figure 9 is a flowchart of a reset current control method according to an embodiment of the present disclosure.

### DETAILED DESCRIPTION OF EMBODIMENTS

The present disclosure is described on the basis of the embodiments hereinafter, but the present disclosure is not limited to these embodiments. In the detailed description of the present disclosure hereinafter, numerous specific details are set forth. Those skilled in the art may understand the present disclosure without these specific details. To avoid obscuring the substance of the present disclosure, well-known methods, procedures, flows, elements and circuits are not described in detail.

In addition, those skilled in the art should understand that the drawings are provided herein for illustration, which are not drawn to scale.

In addition, it should be understood that in the following description, the term "circuit" indicates a conductive loop forming by at least one element or sub-circuit through electrical connections or electromagnetic connections. When referring to that an element or a circuit is "connected to" another element or that an element or a circuit is "connected between" two nodes, it may indicates that the element or the circuit is directly coupled or connected to another element or there is an intermediate element. The elements may be connected in a physical manner, a logical manner, or a combination thereof. In addition, when referring to that an element is "directly coupled" or "directly connected" to another element, it indicates that there is no intermediate element there between.

Unless otherwise stated, the terms "include", "comprise" or any other variations in the specification and claim are intended to be containing, rather than exclusive or exhaustive. That is, the terms indicate "including, but not limited to".

In the description of the present disclosure, it should be understood that the terms such as "the first" and "the second" herein are only used for description, rather than indicating or suggesting relative importance. Furthermore, in the description of the present disclosure, unless otherwise stated, the term "multiple" indicates two or more.

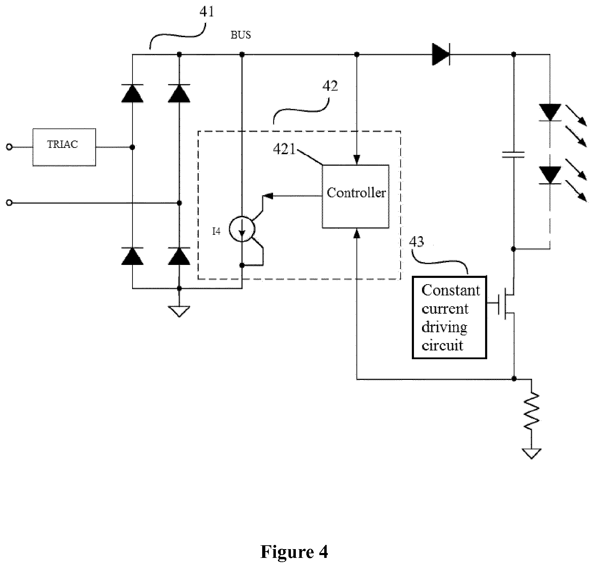

Figure 4 is a circuit diagram of an LED driving circuit according to an embodiment of the present disclosure. As shown in Figure 4, in this embodiment, the LED driving circuit includes a dimmer TRIAC, a rectifier circuit 41, a reset current control circuit 42 and a constant current driving circuit 43. The dimmer TRIAC is a trailing edge dimmer and is connected between an alternating current input terminal and the rectifier circuit 41. The rectifier circuit 41 is configured to convert an alternating current voltage chopped by the dimmer TRIAC to a direct current voltage and output the direct current voltage to a direct current bus BUS. The reset current control circuit 42 is configured to generate a variable reset current to reset the dimmer TRIAC. The reset current control circuit 42 includes a controlled current source 14 and a controller 421. The controlled current source 14 is configured to provide a bleeder path from the direct current bus under control, to generate a reset current for resetting the dimmer TRIAC. The controller 421 is configured to control the controlled current source 14 to draw the reset current from the direct current bus BUS based on the direct current bus voltage VBUS, an LED driving current or an direct current bus current generated by the rectifier circuit 41. The constant current driving circuit 43 is configured to generate the LED driving current to drive an LED load.

In this embodiment, the controller 421 is configured to control the controlled current source 14 to maintain the reset current at a first current during a first time period after the dimmer TRIAC is turned off, and control the controlled current source 14 to maintain the reset current at a second current during a second time period. The first current is less than the second current. The reset current is maintained at a small first current during the first time period, such that a direct current bus voltage is decreased slowly to reduce a circuit loss. During the second time period, the direct current bus voltage drops below a preset value and the reset current is a large second current, such that the dimmer TRIAC is reset reliably.

In this embodiment, the reset current is generated in a case that it is detected that the dimmer is in an off state, to reset the dimmer TRIAC. The reset current is variable and has a contrary variation trend to a direct current bus voltage of the LED driving circuit, such that the circuit loss of the dimmer during the reset process is reduced, thus the efficiency of the circuit is improved.

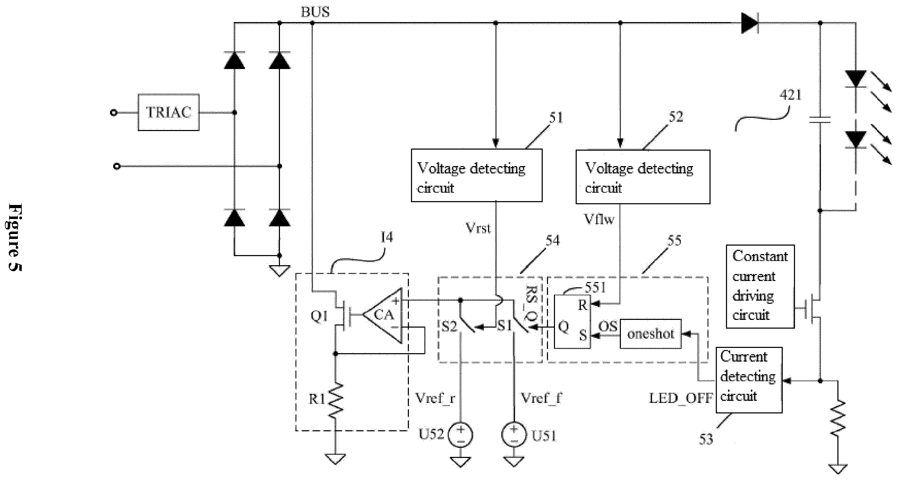

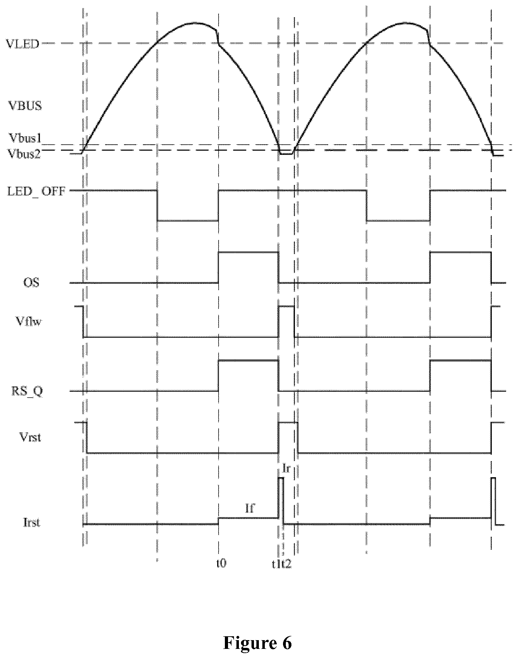

Figure 5 is a schematic circuit diagram of an LED driving circuit according to an embodiment of the present disclosure. Figure 6 is a waveform diagram of the LED driving circuit according to the embodiment of the present disclosure.

In the embodiment, as shown in Figure 5, the controlled current source 14 is configured to provide a bleeder path from the direct current bus under control to generate a variable reset current. The controlled current source 14 includes a differential amplifier CA, a transistor Q1, and a resistor R1. The transistor Q1 is connected between the direct current bus BUS and the resistor R1. The resistor R1 is used to acquire a current sampling signal in the bleeder path. Inputs of the differential amplifier CA are supplied with the current sampling signal in the bleeder path and an output voltage outputted from the voltage switching circuit 54, and an output of the differential amplifier CA outputs a control signal for the transistor Q1 to control the transistor Q1 to generate the variable reset current.

The controller 421 includes a voltage detecting circuit 51, a voltage detecting circuit 52, a current detecting circuit 53, a voltage switching circuit 54 and a logic circuit 55.

The voltage switching circuit 54 includes switches S1 and S2. The switch S1 is connected between a non-inverting input of the differential amplifier CA and the voltage source U51, and is controlled in response to an output signal RS_Q of the logic circuit 55. The switch S2 is connected between the non-inverting input of the differential amplifier CA and the voltage source U52, and is controlled in response to an output signal Vrst of the voltage detecting circuit 51. The voltage source U51 may output a first voltage Vref f to the non-inverting input of the differential amplifier CA via the switch S1. The voltage source U52 may output a second voltage Vref r to the non-inverting input of the differential amplifier CA via the switch S2. It should be understood that the above circuit structure is merely an implementation for realizing the embodiment of the present embodiment, and other circuit structures for realizing the above functions may also be applied in the present embodiment. For example, the switch S1 and the switch S2 are connected to an inverting input of the differential amplifier CA.

The voltage detecting circuit 51 is connected to the direct current bus BUS and a control terminal of the switch S2, and is configured to detect the direct current bus voltage VBUS and output a control signal Vrst, to control the switch S2 to be turned on/off. The control signal Vrst is valid in a case that the direct current bus voltage VBUS is less than a first voltage threshold Vbus1. The first threshold voltage Vbus1 has a small voltage value set based on a type of the dimmer, so that the dimmer TRIAC is reset reliably and the circuit loss is reduced to the maximum extent.

The voltage detection circuit 52 is connected to the direct current bus BUS and the logic circuit, and is configured to detect the direct current bus voltage VBUS and output a control signal Vflw to the logic circuit 55. The control signal Vflw is valid in a case that the direct current bus voltage VBUS is less than a second voltage threshold Vbus2. The second voltage threshold Vbus2 is less than the first voltage threshold Vbus1. In another embodiment, the second voltage threshold Vbus2 may also be equal to the first voltage threshold Vbus1. Since the reset current is maintained at a large second current in a case that the direct current bus voltage drops below the first voltage threshold Vbusl, the direct current bus voltage VBUS drops rapidly, so that the direct current bus voltage VBUS drops to the first voltage threshold Vbus1 and the second voltage threshold Vbus2 almost at the same time.

The logic circuit 55 includes a one-shot circuit (oneshot) and an RS flip-flop 551. The one-shot circuit is connected between the current detecting circuit 53 and a set terminal S of the RS flip-flop 551. The reset terminal R of the RS flip-flop 551 is connected to the voltage detecting circuit 52, and an output Q of the RS flip-flop 551 is connected to a control terminal of the switch S1, to control the switch S1 to be turned on/off.

The current detecting circuit 53 is connected on a path of the LED load and is configured to detect the LED driving current and output a control signal LED_OFF. The control signal LED OFF is valid in a case that the LED driving current is less than the current threshold. The current threshold is preset and is used to characterize the LED driving current or the direct current bus current when the dimmer is switched to an off state from an on state. In an embodiment, the one-shot circuit outputs a signal OS to the set terminal S of the RS flip-flop circuit 551 in response to a rising edge of the control signal LED_OFF to control the switch S1 in the voltage switching circuit 54 to be turned on. The voltage detecting circuit 52 outputs the control signal Vflw to the reset terminal R of the RS flip-flop circuit 551 to control the switch S1 in the voltage switching circuit 54 to be turned off. It should be understood that, in another embodiment, the current detecting circuit 53 may be connected to the direct current bus to detect the direct current bus current and output a valid control signal in a case that the direct current bus current is less than the current threshold.

The waveform diagram for the LED driving circuit in the embodiment is as shown in Figure 6. In a case that the direct current bus voltage VBUS is greater than a driving voltage VLED of the LED load (that is, during a time period where the dimmer is in an on state), the LED load is turned on, and the control signal LED OFF outputted from the current detecting circuit 53 is at a low level. In a case that the direct current bus voltage VBUS is less than the driving voltage VLED of the LED load (that is, during a time period where the dimmer is in the off state), the capacitor connected in parallel with the LED load discharges to ensure the current flowing through the LED load. In a case that the current detecting circuit 53 detects that the LED driving current is less than the current threshold, the control signal LED_OFF outputted from the current detecting circuit 53 is at a high level.

During the first time period (time t0 to t1), at time t0, a rising edge occurs in the control signal LED OFF, the one-shot circuit is triggered to output the signal OS to the set terminal S of the RS flip-flop 551, to allow the RS flip-flop 551 to output the output signal RS_Q at the high level, such that the switch S1 is controlled to be turned on in response to the output signal RS_Q, and the non-inverting input of the differential amplifier CA is supplied with the first voltage Vref f to allow the transistor Q1 to provide a small reset current. Therefore, during the first time period (time t0 to t1), the reset current Irst is maintained at a small first current If, so that the direct current bus voltage drops slowly, thereby reducing the circuit loss, thus improving the efficiency of the circuit.

During the second time period (time t1 to t2), at time t1, the direct current bus voltage VBUS is less than the first voltage threshold Vbusl, and the control signal Vrst outputted from the voltage detecting circuit 51 is at the high level, and the switch S2 is controlled to be turned on. The non-inverting input of the differential amplifier CA is supplied with the second voltage Vref r to allow the transistor Q1 to provide a large reset current, and the direct current bus voltage VBUS rapidly drops below the second voltage threshold Vbus2, and the voltage detecting circuit 52 outputs the control signal Vflw at the high level. In this case, the RS flip-flop is reset, and an output signal RS_Q is at the low level, such that the switch S1 is controlled to be turned off, and the transistor Q1 stops generating the first current If. Therefore, during the second time period (time t1 to t2), the reset current Irst is maintained at a large second current Ir, so that the dimmer is reset reliably. It should be understood that in a case that the reset current Irst is sufficiently large, the dimmer may be reset rapidly, and in a case that the dimmer is reset, the reset current Irst drops to zero. In an embodiment, the second voltage threshold Vbus2 is equal to the first voltage threshold Vbusl, and the first current If is stopped being generated when the second current Ir is generated. In an embodiment, the second voltage threshold Vbus2 is less than the first voltage threshold Vbusl, and the first current If is stopped being generated when the second current Ir is generated.

In the embodiment, with the current detecting circuit, the voltage detecting circuit, the voltage switching circuit and the logic circuit, the controlled current source 14 is controlled to provide the reset current from the direct current bus only in the second half cycle during the reset process of the dimmer, thereby reducing the circuit loss, thus improving the efficiency of the circuit.

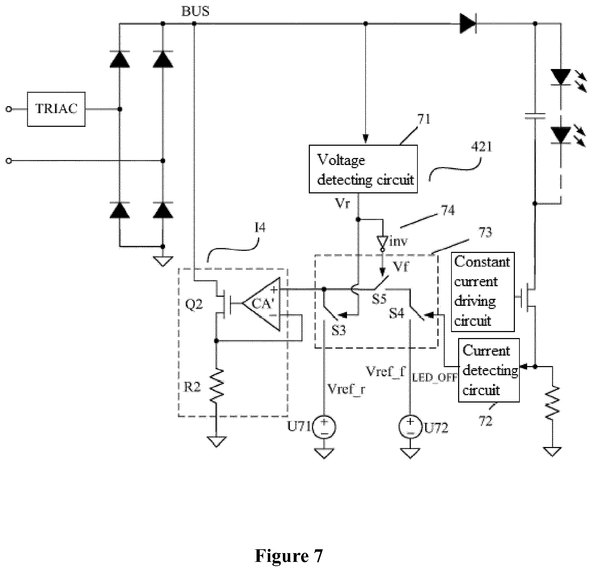

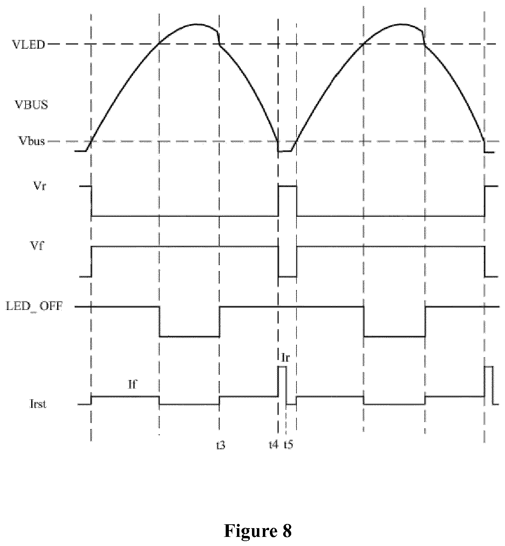

Figure 7 is a schematic circuit diagram of an LED driving circuit according to another embodiment of the present disclosure. Figure 8 is a waveform diagram for the LED driving circuit according to the other embodiment of the present disclosure.

In the embodiment, as shown in Figure 7, the controlled current source 14 is configured to provide a bleeder path from the direct current bus under control to generate a variable reset current. The controlled current source 14 includes a differential amplifier CA', a transistor Q2 and a resistor R2. The transistor Q2 is connected between the direct current bus BUS and the resistor R2. The resistor R2 is used to acquire a current sampling signal in the bleeder path. Inputs of the differential amplifier CA' are supplied with a current sampling signal on the bleed path and an output voltage outputted from the voltage switching circuit 73, and an output of the differential amplifier CA' outputs a control signal of the transistor Q2 to control the transistor Q2 to generate the variable reset current.

The controller 421 includes a voltage detecting circuit 71, a current detecting circuit 72, a voltage switching circuit 73 and a logic circuit 74.

The voltage switching circuit 73 includes switches S3, S4 and S5. The switch S3 is connected between a non-inverting input of the differential amplifier CA' and a voltage source U71, and is controlled in response to the control signal Vrst of the voltage detecting circuit 71. The switch S4 is connected between the non-inverting input of the differential amplifier CA' and a voltage source U72, and is controlled in response to the output signal LED_OFF of the current detecting circuit 72. The switch S5 is connected between the switch S3 and the switch S4, and is controlled in response to the control signal Vf outputted from the logic circuit 74. The voltage source U72 may output the first voltage Vref f to the non-inverting input of the differential amplifier CA' via the switches S4 and S5, and the voltage source U71 may output the second voltage Vref r to the non-inverting input of the differential amplifier CA' via the switch S3. It should be understood that the above circuit structure is merely an embodiment for realizing the present disclosure, and other circuit structures for realizing the above functions may also be applied in the present disclosure. For example, the switch S3, S4 and S5 are connected to an inverting input of the differential amplifier CA'.

The voltage detecting circuit 71 is connected to the direct current bus BUS and a control terminal of the switch S3, and is configured to detect the direct current bus voltage VBUS and output the control signal Vr, to control the switch S3 to be turned on/off. The control signal Vr is valid in a case that the direct current bus voltage VBUS is less than the voltage threshold Vbus. The threshold voltage Vbus has a small voltage value set based on a type of the dimmer, so that the circuit loss is reduced to the maximum extent.

In an embodiment, the logic circuit 74 includes an inverter inv. The inverter inv is connected between the voltage detecting circuit 71 and a control terminal of the switch S5, and is configured to invert the control signal Vr outputted from the voltage detecting circuit 71 and output the control signal Vf, to control the switch S5 to be the turned on/off.

The current detecting circuit 72 is connected on a path of the LED load and is configured to detect the LED driving current and output the control signal LED OFF, to control the switch S4 to be turned on/off. The control signal LED_OFF is valid in a case that the LED driving current is less than the current threshold. The current threshold is preset and is used for characterizing the LED driving current or the direct current bus current when the dimmer is switched to the off state from the on state. It should be understood that in another embodiment, the current detecting circuit 72 may be connected to the direct current bus to detect the direct current bus current and output a valid control signal in a case that the direct current bus current is less than the current threshold.

The waveform diagram of control signals for the LED driving circuit in the embodiment is as shown in Figure 8. In a case that the direct current bus voltage VBUS is greater than the driving voltage VLED of the LED load (that is, during the time period where the dimmer is in the on state), the LED load is turned on, and the control signal LED_OFF outputted from the current detecting circuit 72 is at the low level. In a case that the direct current bus voltage VBUS is less than the driving voltage VLED of the LED load (that is, during the time period where the dimmer is in the off state), the capacitor discharges to ensure the current flowing through the LED load, and the control signal LED_OFF outputted from the current detecting circuit 72 is at the high level.

During the first time period (time t3 to t4), the direct current bus voltage VBUS is greater than the threshold voltage Vbus, the control signal Vr outputted from the voltage detecting circuit 71 is at the low level, and the switch S3 maintains at the off state under control. The inverter inv inverts the control signal Vr and outputs a control signal Vf at the high level, and the switch S5 maintains at the on state under control. At time t3, the LED driving current is less than the current threshold, the control signal LED_OFF outputted from the current detecting circuit 72 is at the high level, such that the switch S4 is turned on under control. In a case that switches S4 and S5 are both turned on, the non-inverting input of differential amplifier CA' is supplied with the first voltage Vref_f, to allow the transistor Q2 to provide a small reset current. At time t4, the direct current bus voltage VBUS drops below the threshold voltage Vbus, the control signal Vr outputted from the voltage detecting circuit 71 is at the high level, such that the switch S3 is controlled to be turned on. The inverter inv inverts the control signal Vr and outputs a control signal Vf at the low level, such that the switch S5 is controlled to be turned off, thus the first time period ends. During the first time period (time t3 to t4), the reset current Irst is maintained at a small first current If, so that the direct current bus voltage drops slowly, thereby reducing the circuit loss, thus improving the efficiency of the circuit.

During the second time period (time t4 to t5), the direct current bus voltage VBUS is less than the threshold voltage Vbus, the control signal Vr outputted from the voltage detecting circuit 71 is at the high level, such that the switch S3 maintains at the on state under control. The non-inverting input of the differential amplifier CA' is supplied with the second voltage Vref_r, to allow the transistor Q2 to provide a large reset current. During the second time period (time t4 to t5), the reset current Irst is maintained at a large second current Ir, so that the dimmer is reset reliably. It should be understood that in a case that the reset current Irst is sufficiently large, the silicon controlled dimmer may be reset rapidly, therefore, the reset current Irst is maintained at the large second current Ir for a short time period (shorter than a time period where the control signal Vr is valid).

In this embodiment, in the second half of each cycle, the inverter is used to change the input voltage of the controlled current source from the first time period to the second time period, so that the reset current is maintained at a small current If during the first time period, to reduce the circuit loss, and the reset current is maintained at a large current Ir during the second time period, to reset the dimmer. The LED driving circuit in this embodiment has a simple structure, which is easy to implement and has a low cost.

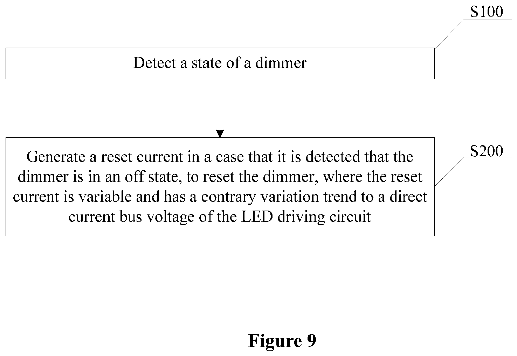

Figure 9 is a flowchart of a reset current control method according to an embodiment of the present disclosure. As shown in Figure 9, in step S100, a state of the dimmer is detected. In an embodiment, the state of the dimmer is detected by detecting a current value of the LED driving current or the direct current bus current. The dimmer is in an off state in a case that the current value of the LED driving current or the direct current bus current is less than a current threshold. The current threshold is preset and is used for characterizing the LED driving current or the direct current bus current when the dimmer is switched to the off state from the on state. Further, the dimmer is a trailing edge dimmer.

In step S200, a reset current is generated in a case that it is detected that the dimmer is in the off state, to reset the dimmer. The reset current is variable and has a contrary variation trend to a direct current bus voltage of the LED driving circuit.

The reset current control method according to this embodiment further includes: performing control to maintain the reset current at a first current during a first time period after the dimmer is turned off, and performing control to maintain the reset current at a second current during a second time period. The first current is less than the second current.

The reset current control method according to the embodiment further includes: performing control to maintain the reset current at the first current during a time period where the LED driving current or the direct current bus current is less than a current threshold.

The reset current control method according to the embodiment further includes: performing control to maintain the reset current at the second current in a case that the direct current bus voltage is less than a first voltage threshold, to reset the dimmer.

In an embodiment, the reset current control method according to the embodiment further includes: performing control to maintain the reset current at the first current during a time period from a time when the LED driving current or the direct current bus current drops below the current threshold to a time when the direct current bus voltage drops below a second voltage threshold. The second voltage threshold is less than or equal to the first voltage threshold.

## Claims

1. A reset current control method for an LED driving circuit, comprising:
detecting (S100) a state of a dimmer of the LED driving circuit; and
generating (S200) a reset current in a case that it is detected that the dimmer is in an off state, to reset the dimmer, **characterized in that**
the reset current is variable and the reset current is controlled to be increased in a step mode after the dimmer is turned off, wherein
the reset current is maintained at a first current (If) during a first time period after the dimmer is turned off; and
the reset current is maintained at a second current (Ir) during a second time period, wherein the first current (If) is less than the second current (Ir), wherein the first time period is earlier than the second time period,
wherein the dimmer is a trailing edge dimmer, and
the reset current is maintained at the first current (If) during a time period where a light emitting diode, LED, driving current or a direct current bus current is less than a current threshold, wherein the current threshold is preset and is used to characterize the LED driving current or the direct current bus current when the dimmer is switched to an off state from an on state; and
the reset current is maintained at the second current (Ir) during a time period where a direct current bus voltage is less than a first voltage threshold, to reset the dimmer.

2. The reset current control method according to claim 1, wherein
the reset current is maintained at the first current (If) during a time period from a time when the LED driving current or the direct current bus current drops below the current threshold to a time when the direct current bus voltage drops below the first voltage threshold.

3. A reset current control circuit (42), applied in a light emitting diode, LED, driving circuit provided with a dimmer (TRIAC), wherein
the reset current control circuit (42) is configured to generate a reset current in a case that it is detected that the dimmer (TRIAC) is in an off state, to reset the dimmer (TRIAC), **characterized in that**
the reset current is variable and the reset current is controlled to be increased in a step mode after the dimmer (TRIAC) is turned off, and wherein
the dimmer (TRIAC) is a trailing edge dimmer,
the reset current control circuit comprises:
a controlled current source (14) configured to generate the reset current under control; and
a controller (421) configured to control the controlled current source to maintain the reset current at a first current (If) during a first time period after the dimmer (TRIAC) is turned off, and control the controlled current source to maintain the reset current at a second current (Ir) during a second time period, wherein the first current (If) is less than the second current (Ir), and the first time period is earlier than the second time period, and
the controller (421) is further configured to perform control to maintain the reset current at the first current (If) during a time period where an LED driving current or a direct current bus current is less than a current threshold, and configured to perform control to maintain the reset current at the second current (Ir) during a time period where a direct current bus voltage (VBUS) is less than a first voltage threshold (Vbus1), to reset the dimmer (TRIAC), wherein the current threshold is preset and is used to characterize the LED driving current or the direct current bus current when the dimmer (TRIAC) is switched to an off state from an on state.

4. The reset current control circuit according to claim 3, wherein the controller (421) is further configured to perform control to maintain the reset current at the first current (If) during a time period from a time when the LED driving current or the direct current bus current drops below the current threshold to a time when the direct current bus voltage (VBUS) drops below the first voltage threshold (Vbus1).

5. The reset current control circuit according to claim 3, wherein the controller (421) comprises:
a voltage switching circuit (54) configured to output an output voltage under control;
a first voltage detecting circuit (51) configured to control the voltage switching circuit (54) to output a second voltage in a case that it is detected that the direct current bus voltage (VBUS) is less than the first voltage threshold (Vbus1), wherein the second voltage corresponds to the second current (Ir);
a second voltage detecting circuit (52) configured to output a first control signal (Vflw) in a case that it is detected that the direct current bus voltage (VBUS) is less than a second voltage threshold (Vbus2);
a current detecting circuit (53) configured to output a second control signal (LED_OFF) in a case that it is detected that an LED driving current or a direct current bus current drops below the current threshold ; and
a first logic circuit (55) configured to control, in response to the second control signal (LED_OFF), the voltage switching circuit (54) to output a first voltage, and control, in response to the first control signal (Vflw), the voltage switching circuit (54) to stop outputting the first voltage, wherein the first voltage corresponds to the first current (If).

6. The reset current control circuit according to claim 3, wherein the controller (421) comprises:
a third voltage detecting circuit (71) configured to output a third control signal (Vr) in a case that it is detected that the direct current bus voltage (VBUS) is less than the first voltage threshold (Vbus1), to control a voltage switching circuit (73) to output a second voltage;
a second logic circuit (74) configured to output a fourth control signal (Vf) in response to the third control signal (Vr);
a current detecting circuit (72) configured to output a fifth control signal (LED OFF) in a case that it is detected that an LED driving current or a direct current bus current is less than the current threshold; and
the voltage switching circuit (73) configured to output the second voltage in response to the third control signal (Vr), and to output a first voltage in response to the fourth control signal (Vf) and the fifth control signal (LED_OFF), wherein the second voltage corresponds to the second current (Ir), and the first voltage corresponds to the first current (If).

7. A light emitting diode, LED, driving circuit, comprising:
a dimmer (TRIAC);
a rectifier circuit (41) connected to the dimmer (TRIAC), wherein an output of the rectifier circuit (41) is connected to a direct current bus (BUS);
the reset current control circuit (42) according to any one of claims 3 to 6, wherein the reset current control circuit is connected to the direct current bus (BUS); and
a constant current driving circuit (43) configured to generate an LED driving current to drive an LED load.

## Patentansprüche

1. Rücksetzstromansteuerungsverfahren für eine LED-Ansteuerungsschaltung, umfassend:
Erfassen (S100) eines Zustandes eines Dimmers der LED-Ansteuerungsschaltung; und
Erzeugen (S200) eines Rücksetzstroms in einem Fall, in dem erfasst wurde, dass der Dimmer in einem ausgeschalteten Zustand ist, um den Dimmer zurückzusetzen, **dadurch gekennzeichnet, dass**
der Rücksetzstrom variabel ist und der Rücksetzstrom nachdem der Dimmer ausgeschaltet wurde zur Erhöhung in einem Schrittmodus kontrolliert ist, wobei
der Rücksetzstrom während eines ersten Zeitraums nachdem der Dimmer ausgeschaltet wurde bei einer ersten Stromstärke (If) beibehalten wird; und wobei
der Rücksetzstrom während eines zweiten Zeitraums bei einer zweiten Stromstärke (Ir) beibehalten wird, wobei die erste Stromstärke (If) kleiner als die zweite Stromstärke (Ir) ist, wobei der erste Zeitraum früher als der zweite Zeitraum ist,
wobei der Dimmer ein Phasenabschnittsdimmer ist, und
wobei der Rücksetzstrom während eines Zeitraums bei der ersten Stromstärke (If) beibehalten wird, in welchem eine Leuchtdioden-, LED-, Ansteuerungsstromstärke oder eine Gleichstrombusstromstärke kleiner als ein Stromstärkeschwellenwert ist, wobei der Stromstärkeschwellenwert voreingestellt ist und dazu verwendet wird, die LED-Ansteuerungsstromstärke oder die Gleichstrombusstromstärke zu kennzeichnen, wenn der Dimmer in einen ausgeschalteten Zustand aus einem angeschalteten Zustand geschaltet wird, und
wobei der Rücksetzstrom während eines Zeitraums bei der zweiten Stromstärke (Ir) beibehalten wird, in welchem eine Gleichstrombusspannung kleiner als ein erster Spannungsschwellenwert ist, um den Dimmer zurückzusetzen.

2. Rücksetzstromansteuerungsverfahren nach Anspruch 1, wobei der Rücksetzstrom bei der ersten Stromstärke (If) während eines Zeitraums von einem Zeitpunkt, in dem die LED-Ansteuerungsstromstärke oder die Gleichstrombusstromstärke unter den Stromstärkeschwellenwert fällt, bis zu einem Zeitpunkt, in dem die Gleichstrombusspannung unter den ersten Spannungsschwellwert fällt, beibehalten wird.

3. Rücksetzstromansteuerungsschaltung (42), die in einer mit einem Dimmer (TRIAC) ausgestatteten Leuchtdioden-, LED-, Ansteuerungsschaltung verwendet wird, wobei
die Rücksetzstromansteuerungsschaltung (42) ausgebildet ist, einen Rücksetzstrom in einem Fall zu erzeugen, in dem erfasst wurde, dass der Dimmer (TRIAC) in einem ausgeschalteten Zustand ist, um den Dimmer (TRIAC) zurückzusetzen,
**dadurch gekennzeichnet, dass**
der Rücksetzstrom variabel ist und der Rücksetzstrom nachdem der Dimmer (TRIAC) ausgeschalten wurde zur Erhöhung in einem Schrittmodus kontrolliert ist, und wobei
der Dimmer (TRIAC) ein Phasenabschnittsdimmer ist,
wobei die Rücksetzstromansteuerungsschaltung umfasst:
eine kontrollierte Stromquelle (I4), die ausgebildet ist, den Rücksetzstrom kontrolliert zu erzeugen; und
einen Kontroller (421), der ausgebildet ist, die kontrollierte Stromquelle zu kontrollieren, um den Rücksetzstrom während eines ersten Zeitraums nachdem der Dimmer (TRIAC) ausgeschalten wurde bei einer ersten Stromstärke (If) beizubehalten, und die kontrollierte Stromquelle zu kontrollieren, um den Rücksetzstrom während eines zweiten Zeitraums bei einer zweiten Stromstärke (Ir) beizubehalten, wobei die erste Stromstärke (If) kleiner als die zweite Stromstärke (Ir) ist und der erste Zeitraum früher als der zweite Zeitraum ist, und
wobei der Kontroller (421) ferner zum Kontrollieren ausgebildet ist, um den Rücksetzstrom während eines Zeitraums bei der ersten Stromstärke (If) beizubehalten, in welchem eine LED-Ansteuerungsstromstärke oder eine Gleichstrombusstromstärke kleiner als ein Stromstärkeschwellenwert ist, und zum Kontrollieren ausgebildet ist, um den Rücksetzstrom während eines Zeitraums bei der zweiten Stromstärke (Ir) beizubehalten, in welchem eine Gleichstrombusspannung (VBUS) kleiner als ein erster Spannungsschwellenwert (Vbus1) ist, um den Dimmer (TRIAC) zurückzusetzen, wobei der Stromstärkeschwellenwert voreingestellt ist und dazu verwendet wird, die LED-Ansteuerungsstromstärke oder die Gleichstrombusstromstärke zu kennzeichnen, wenn der Dimmer (TRIAC) in einen ausgeschalteten Zustand aus einem angeschalteten Zustand geschaltet wird.

4. Rücksetzstromansteuerungsschaltung nach Anspruch 3, wobei der Kontroller (421) ferner zum Kontrollieren ausgebildet ist, um den Rücksetzstrom bei der ersten Stromstärke (If) während eines Zeitraums von einem Zeitpunkt, in welchem die LED-Ansteuerungsstromstärke oder die Gleichstrombusstromstärke unter den Stromstärkeschwellenwert fällt, bis zu einem Zeitpunkt, in welchem die Gleichstrombusspannung (VBUS) unter den ersten Spannungsschwellenwert (Vbus1) fällt, beizubehalten.

5. Rücksetzstromansteuerungsschaltung nach Anspruch 3, wobei der Kontroller (421) umfasst:
einen Spannungsschaltkreis (54), der ausgebildet ist, eine Ausgangsspannung kontrolliert auszugeben;
eine erste Spannungserfassungsschaltung (51), die ausgebildet ist, den Spannungsschaltkreis (54) zum Ausgeben einer zweite Spannung in einem Fall zu kontrollieren, in dem erfasst wurde, dass die Gleichstrombusspannung (VBUS) kleiner als der erste Spannungsschwellenwert (Vbus1) ist, wobei die zweite Spannung der zweiten Stromstärke (Ir) zugeordnet ist;
eine zweite Spannungserfassungsschaltung (52), die ausgebildet ist, ein erstes Kontrollsignal (Vflw) in einem Fall auszugeben, in dem erfasst wurde, dass die Gleichstrombusspannung (VBUS) geringer als ein zweiter Spannungsschwellenwert (Vbus2) ist;
eine Stromstärkeerfassungsschaltung (53), die ausgebildet ist, ein zweites Kontrollsignal (LED_OFF) in einem Fall auszugeben, in dem erfasst wurde, dass eine LED-Ansteuerungsspannung oder eine Gleichstrombusspannung unter den Stromstärkeschwellenwert fällt; und
eine ersten Logikschaltung (55), die ausgebildet ist, ansprechend auf das zweite Kontrollsignal (LED_OFF) den Spannungsschaltkreis (54) zum Ausgeben einer ersten Spannung zu kontrollieren und ausgebildet ist, ansprechend auf das erste Kontrollsignal (Vflw) den Spannungsschaltkreis (54) zum Stoppen des Ausgebens der ersten Spannung zu kontrollieren, wobei die erste Spannung der ersten Stromstärke (If) zugeordnet ist.

6. Rücksetzstromansteuerungsschaltung nach Anspruch 3, wobei der Kontroller (421) umfasst:
eine dritte Spannungserfassungsschaltung (71), die ausgebildet ist ein drittes Kontrollsignal (Vr) in einem Fall auszugeben, in dem erfasst wurde, dass die Gleichstrombusspannung (VBUS) kleiner als ein erster Spannungsschwellenwert (Vbus1) ist, um einen Spannungsschaltkreis (73) zum Ausgeben einer zweiten Spannung zu kontrollieren;
einer zweiten Logikschaltung (74), die ausgebildet ist, ansprechend auf das dritte Kontrollsignal (Vr) ein viertes Kontrollsignal (Vf) auszugeben;
eine Stromstärkeerfassungsschaltung (72), die ausgebildet ist, ein fünftes Kontrollsignal (LED_OFF) in einem Fall auszugeben, in dem erfasst wurde, dass eine LED-Ansteuerungsspannung oder eine Gleichstrombusspannung kleiner als ein Stromstärkeschwellenwert ist; und
wobei der Spannungsschaltkreis (73) ausgebildet ist, ansprechend auf das dritte Kontrollsignal (Vr) die zweite Spannung auszugeben, und ansprechend auf das vierte Kontrollsignal (Vf) und das fünfte Kontrollsignal (LED_OFF) eine erste Spannung auszugeben, wobei die zweite Spannung der zweiten Stromstärke (Ir) zugeordnet ist, und wobei die erste Spannung der ersten Stromstärke (If) zugeordnet ist.

7. Leuchtdioden-, LED-, Ansteuerungsschaltung, umfassend:
einen Dimmer (TRIAC);
eine Gleichrichterschaltung (41), die mit dem Dimmer (TRIAC) verbunden ist, wobei ein Ausgang der Gleichrichterschaltung (41) mit einem Gleichstrombus (BUS) verbunden ist:
die Rücksetzstromansteuerungsschaltung (42) nach einem der Ansprüche 3 bis 6, wobei die Rücksetzstromansteuerungsschaltung mit dem Gleichstrombus (BUS) verbunden ist; und
eine Konstantstromansteuerungsschaltung (43), die ausgebildet ist, einen LED-Ansteuerungsstrom zum Ansteuern einer LED-Last zu erzeugen.

## Revendications

1. Procédé de commande de courant de réinitialisation pour un circuit d'entraînement de DEL, comprenant :
la détection (S100) d'un état d'un gradateur du circuit d'entraînement de DEL ; et
la génération (S200) d'un courant de réinitialisation dans un cas où il est détecté que le gradateur est dans un état désactivé, pour réinitialiser le gradateur, **caractérisé en ce que**
le courant de réinitialisation est variable et le courant de réinitialisation est commandé pour être augmenté dans un mode par étapes après la désactivation du gradateur, dans lequel
le courant de réinitialisation est maintenu à un premier courant (If) durant une première période de temps après la désactivation du gradateur ; et
le courant de réinitialisation est maintenu à un deuxième courant (Ir) durant une deuxième période de temps, dans lequel le premier courant (If) est inférieur au deuxième courant (Ir), dans lequel la première période de temps est plus tôt que la deuxième période de temps,
dans lequel le gradateur est un gradateur de bord arrière, et
le courant de réinitialisation est maintenu au premier courant (If) durant une période de temps où un courant d'entraînement de diode électroluminescente, DEL, ou un courant de bus à courant continu est inférieur à un seuil de courant, dans lequel le seuil de courant est prédéfini et est utilisé pour caractériser le courant d'entraînement de DEL ou le courant de bus à courant continu lorsque le gradateur est commuté dans un état désactivé depuis un état activé ; et
le courant de réinitialisation est maintenu au deuxième courant (Ir) durant une période de temps où une tension de bus à courant continu est inférieure à un premier seuil de tension, pour réinitialiser le gradateur.

2. Procédé de commande de courant de réinitialisation selon la revendication 1, dans lequel
le courant de réinitialisation est maintenu au premier courant (If) durant une période de temps allant d'un moment où le courant d'entraînement de DEL ou le courant de bus à courant continu chute sous le seuil de courant à un moment où la tension de bus à courant continu chute sous le premier seuil de tension.

3. Circuit de commande de courant de réinitialisation (42), appliqué dans le circuit d'entraînement de diode électroluminescente, DEL, pourvu d'un gradateur (TRIAC), dans lequel
le circuit de commande de courant de réinitialisation (42) est configuré pour générer un courant de réinitialisation dans un cas où il est détecté que le gradateur (TRIAC) est dans un état désactivé, pour réinitialiser le gradateur (TRIAC),
**caractérisé en ce que**
le courant de réinitialisation est variable et le courant de réinitialisation est commandé pour être augmenté dans un mode par étapes après la désactivation du gradateur (TRIAC), et dans lequel
le gradateur (TRIAC) est un gradateur de bord arrière,
le circuit de commande de courant de réinitialisation comprend :
une source de courant commandée (14) configurée pour générer le courant de réinitialisation sous commande ; et
un dispositif de commande (421) configuré pour commander la source de courant commandée pour maintenir le courant de réinitialisation à un premier courant (If) durant une première période de temps après la désactivation du gradateur (TRIAC), et commander la source de courant commandée pour maintenir le courant de réinitialisation à un deuxième courant (Ir) durant une deuxième période de temps, dans lequel le premier courant (If) est inférieur au deuxième courant (Ir), et la première période de temps est plus tôt que la deuxième période de temps, et
le dispositif de commande (421) est en outre configuré pour effectuer une commande afin de maintenir le courant de réinitialisation au premier courant (If) durant une période de temps où un courant d'entraînement de DEL ou un courant de bus à courant continu est inférieur à un seuil de courant, et configuré pour effectuer une commande afin de maintenir le courant de réinitialisation au deuxième courant (Ir) durant une période de temps où une tension de bus à courant continu (VBUS) est inférieure à un premier seuil de tension (Vbus1), pour réinitialiser le gradateur (TRIAC), dans lequel le seuil de courant est prédéfini et est utilisé pour caractériser le courant d'entraînement à DEL ou le courant de bus à courant continu lorsque le gradateur (TRIAC) est commuté dans un état désactivé depuis un état activé.

4. Circuit de commande de courant de réinitialisation selon la revendication 3, dans lequel le dispositif de commande (421) est en outre configuré pour effectuer une commande afin de maintenir le courant de réinitialisation au premier courant (If) durant une période de temps allant d'un moment où le courant d'entraînement de DEL ou le courant de bus à courant continu chute sous le seuil de courant à un moment où la tension de bus à courant continu (VBUS) chute sous le premier seuil de tension (Vbus1).

5. Circuit de commande de courant de réinitialisation selon la revendication 3, dans lequel le dispositif de commande (421) comprend :
un circuit de commutation de tension (54) configuré pour délivrer une tension de sortie sous commande ;
un premier circuit de détection de tension (51) configuré pour commander le circuit de commutation de tension (54) pour délivrer une deuxième tension dans un cas où il est détecté que la tension de bus à courant continu (VBUS) est inférieure au premier seuil de tension (Vbus1), dans lequel la deuxième tension correspond au deuxième courant (Ir) ;
un deuxième circuit de détection de tension (52) configuré pour délivrer un premier signal de commande (Vflw) dans un cas où il est détecté que la tension de bus à courant continu (VBUS) est inférieure à un deuxième seuil de tension (Vbus2) ;
un circuit de détection de courant (53) configuré pour délivrer un deuxième signal de commande (LED_OFF) dans un cas où il est détecté qu'un courant d'entraînement de DEL ou un courant de bus à courant continu chute sous le seuil de courant ; et
un premier circuit logique (55) configuré pour commander, en réponse au deuxième signal de commande (LED_OFF), le premier circuit de commutation (54) pour délivrer une première tension, et commander, en réponse au premier signal de commande (Vflw), le circuit de commutation de tension (54) pour arrêter de délivrer la première tension, dans lequel la première tension correspond au premier courant (If).

6. Circuit de commande de courant de réinitialisation selon la revendication 3, dans lequel le dispositif de commande (421) comprend :
un troisième circuit de détection de tension (71) configuré pour délivrer un troisième signal de commande (Vr) dans un cas où il est détecté que la tension de bus à courant continu (VBUS) est inférieure au premier seuil de tension (Vbus1), pour commander un circuit de commutation de tension (73) afin de délivrer une deuxième tension ;
un deuxième circuit logique (74) configuré pour délivrer un quatrième signal de commande (Vf) en réponse au troisième signal de commande (Vr) ;
un circuit de détection de courant (72) configuré pour délivrer un cinquième signal de commande (LED_OFF) dans un cas où il est détecté qu'un courant d'entraînement de DEL ou un courant de bus à courant continu est inférieur au seuil de courant ; et
le circuit de commutation de tension (73) est configuré pour délivrer la deuxième tension en réponse au troisième signal de commande (Vr), et pour délivrer une première tension en réponse au quatrième signal de commande (Vf) et au cinquième signal de commande (LED_OFF), dans lequel la deuxième tension correspond au deuxième courant (Ir), et la première tension correspond au premier courant (If).

7. Circuit d'entraînement de diode électroluminescente, DEL, comprenant :
un gradateur (TRIAC) ;
un circuit redresseur (41) connecté au gradateur (TRIAC), dans lequel une sortie du circuit redresseur (41) est connectée à un bus à courant continu (BUS) ;
le circuit de commande de courant de réinitialisation (42) selon l'une quelconque des revendications 3 à 6, dans lequel le circuit de commande de courant de réinitialisation est connecté au bus à courant continu (BUS) ; et
un circuit d'entraînement à courant constant (43) configuré pour générer un courant d'entraînement de DEL pour entraîner une charge de DEL.
